Europäisches Patentamt

European Patent Office

Office européen des brevets

(19)

(11) Numéro de publication: **0 195 732**
**B1**

## FASCICULE DE BREVET EUROPEEN

(12)

(45) Date de publication du fascicule du brevet:
25.10.89

(51) Int. Cl.⁴: **C01F 7/14**

(21) Numéro de dépôt: **86420076.1**

(22) Date de dépôt: **17.03.86**

(54) Procédé et dispositif de décomposition sans agitation de liqueurs d'aluminate de sodium pour la production d'alumine.

(30) Priorité: 20.03.85 FR 8504598

(43) Date de publication de la demande:
24.09.86 Bulletin 86/39

(45) Mention de la délivrance du brevet:
25.10.89 Bulletin 89/43

(84) Etats contractants désignés:
CH DE GB IT LI NL

(56) Documents cités:
FR-A- 451 593
FR-A- 1 178 685
GB-A- 653 741
HU-A- 3 410

CHEMICAL ABSTRACTS,
vol. 77, no. 4, 25 juillet 1972, page 180, no. 22365q,
Columbus, Ohio, US; & HU - A - 3410 (ALUTERV
ALUMINIUMIPARI TERVEZO VALLALAT) 28-01-1972

(73) Titulaire: ALUMINIUM PECHINEY, 23, rue Balzac,
F-75008 Paris Cédex 08(FR)

(72) Inventeur: Grobelny, Henri, 22, avenue St Jérome -
Bât. 4, F-13100 Aix en Provence(FR)
Inventeur: Perret, Yves, 13, rue Hoche,
F-13120 Gardanne(FR)
Inventeur: Chantriaux, Eric, Les Erbrives Route de Puy
Ricard, F-13100 Aix en Provence(FR)

(74) Mandataire: Pascaud, Claude et al, PECHINEY 28, rue de
Bonnel, F-69433 Lyon Cédex 3(FR)

## Description

### 1. DOMAINE TECHNIQUE DE L'INVENTION

La présente invention concerne un procédé et un dispositif de décomposition sans agitation des liqueurs sursaturées d'aluminate de sodium destinées à la production d'alumine par le procédé BAYER, qui constitue la technique essentielle de production de l'alumine principalement destinée à être transformée en aluminium par électrolyse ignée. Selon ce procédé, la bauxite est traitée à chaud au moyen d'une solution aqueuse d'hydroxyde de sodium, à concentration appropriée, provoquant la solubilisation de l'alumine et l'obtention d'une solution sursaturée d'aluminate de sodium. Après séparation de la phase solide constituant le résidu inattaqué du minerai (boues rouges), la solution sursaturée d'aluminate de sodium est ensemencée avec de l'hydroxyde d'aluminium faisant office d'amorce dans le but de provoquer la précipitation du trihydroxyde d'aluminium.

Cette opération, communément appellée "décomposition" par l'homme de l'art, s'effectue généralement en plusieurs stades successifs qui se distinguent notamment par la température, la granulométrie et la quantité d'amorce introduite, le schéma de circulation des liqueurs dans les bacs successifs et les recyclages éventuels.

Toutes les installations industrielles d'alumine BAYER fonctionnant dans le monde à ce jour utilisent des décomposeurs agités. Toutes les précautions sont prises à la construction et en exploitation pour éviter tout arrêt de l'agitation et de la circulation des liqueurs qui se traduirait par un dépôt irréversible de trihydrate d'alumine dans le fond des bacs, et par la nécessité de les vidanger et de les décolmater chimiquement.

### 2. EXPOSE DU PROBLEME

Il peut, en effet, paraître logique d'effectuer la décomposition sous agitation, aussi bien pour assurer dans certains cas l'homogénéité de la suspension de trihydroxyde d'aluminium dans la liqueur d'aluminate, que pour éviter l'accumulation en masse dans le fond des décomposeurs.

Toutefois, l'absence d'agitation peut présenter un certain nombre d'avantages. Tout d'abord, une augmentation de la vitesse de décomposition de la liqueur d'aluminate par le fait même que la réaction s'effectue en écoulement piston qui, selon la connaissance de l'homme de l'art, conduit à des performances cinétiques supérieures au milieu homogène parfaitement agité.

Sur le plan qualitatif, ensuite, l'absence d'agitation permet d'exalter le processus d'agglomération des fines particules de trihydroxyde d'aluminium entre elles, ce qui constitue un effet favorable pour l'obtention d'une répartition granulométrique comportant le minimum de particules fines.

Enfin, on peut ajouter que l'énergie dépensée par l'agitation n'est pas négligeable, qu'elle soit effectuée par injection d'air ou agitation mécanique. On peut estimer à quelques dizaines de kilowatts par bac, la puissance nécessaire pour entretenir une agitation, pour des volumes de l'ordre du millier de mètres-cubes (par exemple 50-55 kw/1000 m³).

### 3. ETAT DE LA TECHNIQUE ANTERIEURE

On ne trouve pratiquement aucun document décrivant des décomposeurs de solutions d'aluminate sursaturée "BAYER" sans agitation. Tout au plus peut-on signaler la demande de brevet FRA-A-2 446 799 (= CA 1 117 274), dans laquelle on décrit un procédé de décomposition à faible agitation, selon lequel la liqueur d'aluminate est introduite dans la partie basse du décomposeur au moyen d'un tube asperger rotatif, muni de bras latéraux perforés, de façon que cette introduction ne provoque pas de turbulences dans la liqueur en cours de décomposition. La liqueur épuisée est évacuée par surverse à la partie supérieure du décomposeur, tandis que la dispersion de trihydrate à gros grains est récupérée à la partie inférieure. Ce procédé, dans lequel la liqueur d'aluminate circule de bas en haut, peut être assimilé à une décomposition en lit fluide faiblement agité, et sa mise en oeuvre implique une vitesse de circulation de la liqueur relativement plus faible.

D'autres documents décrivent encore des procédés ou des dispositifs permettant de réaliser la décomposition de solution d'aluminate de sodium en présence d'amorce en réacteurs faiblement agités.

Ainsi FR-A 1 178 685 et FR-A 451 593 réalisent la décomposition dans une série de réacteurs alimentés à leur partie supérieure en suspension venant du réacteur précédent et constituant les flux d'alimentation, alors qu'à leur partie inférieure une fraction de la suspension, constituant le flux de soutirage et généralement formée de particules les plus grosses, est extraite pour alimenter le réacteur en aval alors que l'autre fraction contenant les particules les plus fines, constituant le flux de recyclage, est renvoyée en tête même du réacteur pour être combinée au flux d'alimentation. Ces procédés et les dispositifs pour les mettre en œuvre combinent 3 flux dont un flux de recyclage qui implique nécessairement une réhomogénéisation permanente de la suspension et la liqueur en cours de décomposition à l'intérieur de chaque réacteur et par conséquent une certaine agitation.

Le procédé et dispositif selon HU-A 3 410 résumé dans Chemical Abstracts vol 77, 1972 n° 223 65q réalise la décomposition d'une solution d'aluminate de sodium, en présence d'amorce en combinant dans un premier réacteur 2 flux d'alimentation distincts constitués d'une part par la liqueur à décomposer et d'autre part par l'amorce de décomposition auxquels s'ajoute à partir du 2ème réacteur de la série un 3ème flux d'alimentation constitué par le flux de soutirage de la suspension du réacteur précédent. L'absence de flux de recyclage interne d'une fraction de la suspension favorise l'écoulement libre de la suspension dans la partie inférieure des réacteurs mais la nécessaire homogénéisation des 2 ou 3 flux d'alimentation à leur partie supérieure, pour obtenir une suspension homogène et uniformément répartie, conduit là encore à un certain brassage du bain qui retarde l'établissement d'un régime d'écoulement libre de type "piston" favorable à l'amélioration de la cinétique de décomposition et par conséquent à la diminution du nombre de réacteurs à mettre en œuvre ainsi que des moyens d'agitation consommateurs d'énergie.

## 4. OBJET DE L'INVENTION

L'objet de la présente invention, qui va à l'encontre des idées reçues et de la pratique industrielle, est la mise en œuvre d'une décomposition, sans aucune agitation, d'une liqueur d'aluminate de sodium sursaturée, provenant de l'attaque de bauxites par le procédé Bayer et cela dans le but principalement d'améliorer la cinétique de décomposition sans engendrer de dépôt irréversible de matière solide dans les réacteurs.

Plus précisément, un premier objet de l'invention est un procédé de décomposition d'une liqueur d'aluminate de sodium sursaturée en alumine, provenant de l'attaque alcaline de bauxite selon le procédé Bayer, la décomposition étant déclenchée par introduction d'amorces de trihydrate d'alumine, formant ainsi une suspension de trihydrate d'alumine dans l'aluminate de sodium que nous désignerons par la suite par "suspension", ce procédé étant caractérisé en ce que la suspension est introduite à la partie supérieure d'un réacteur dit "décomposeur", non agité, et constituant l'unique flux d'alimentation réparti uniformément sur toute la suface libre, circule dans ledit décomposeur non agité à une vitesse réglée entre 1,5 et 10 mètres par heure, et de préférence entre 3 et 7 mètres par heure, puis est prélevée à sa partie inférieure et envoyée vers l'aval.

Un second objet de l'invention est un dispositif pour la mise en œuvre du procédé de décomposition sans agitation comprenant un réacteur cylindroconique muni à sa partie supérieure d'un conduit d'introduction de la suspension, et à sa partie inférieure d'un dispositif de prélèvement de la suspension, connecté au voisinage de la partie conique du réacteur, caractérisé en ce que la suspension arrivant par le conduit d'introduction est déversée à la partie supérieure du réacteur dans une zone dite de répartition en forme de cône renversé, définie par une série de petits tubes immergés, inclinés par rapport à la verticale et alimentés à leur partie inférieure par un faible débit d'air sous pression de façon à répartir la suspension sur le pourtour de ladite zone.

Le dispositif de prélèvement de la suspension d'aluminate est constitué par un tube comportant, à sa partie inférieure, un moyen d'injection d'air sous pression et, à sa partie supérieure, un caisson de désaération sur lequel se raccordent une tuyauterie de transfert vers le bac suivant et une surverse de recyclage.

## DESCRIPTION DES FIGURES

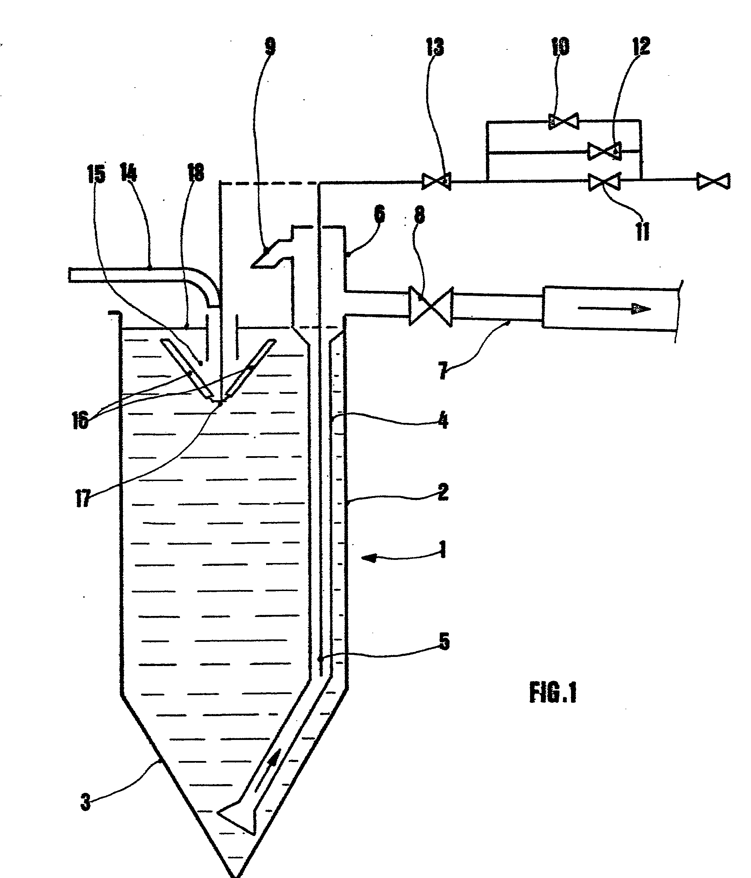

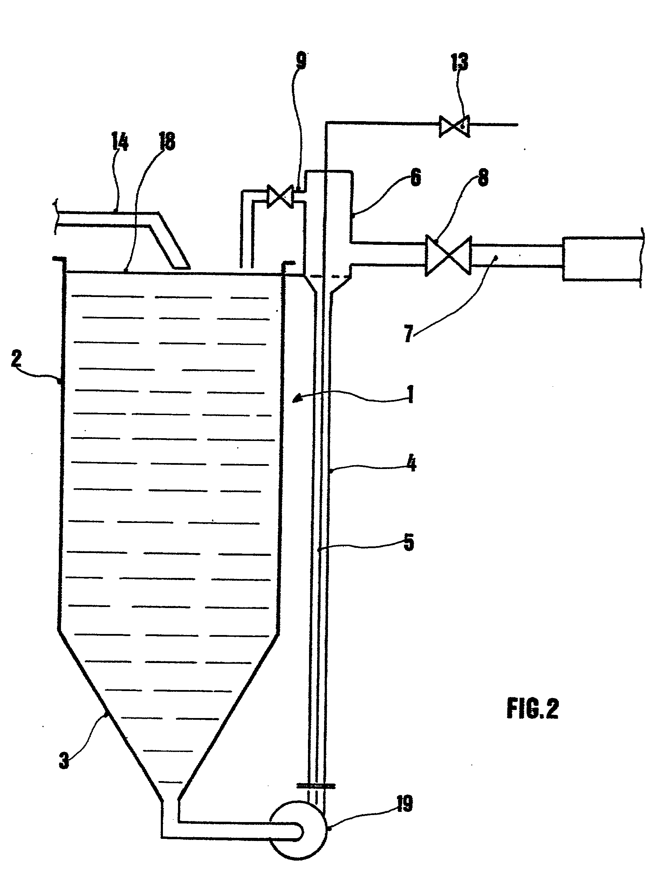

Les figures 1 et 2 illustrent, en coupe verticale schématique, le dispositif pour la mise en œuvre de l'invention.

La figure 1 représente un décomposeur sans agitation, selon l'invention. La figure 2 représente quelques variantes de mise en oeuvre.

Le décomposeur est un bac (1) cylindro-conique, comportant une partie supérieure cylindrique (2) et un fond conique (3). Un tube plongeur (4) aspire la suspension dans le fond du cône. Ce tube (4) est muni d'une injection d'air comprimé (5) qui crée une colonne émulsionnée dans sa partie verticale. La suspension d'hydrate d'alumine émulsionnée remonte dans le caisson de dégazage (6) en servant également de charge sur la tuyauterie de transfert (7) vers l'aval. Cette tuyauterie est munie d'une vanne d'isolement (8). En outre, le caisson de dégazage (6) comporte une surverse (9) de retour vers le décomposeur proprement dit.

Selon le débit d'air injecté par le tube (5), le débit de suspension transférée varie. Une régulation du débit d'air est faite sur le niveau du bac. Ce débit vient en complément d'un débit d'air fixe permettant d'éviter un bouchage du tube d'injection d'air et de maintenir un débit transféré plus régulier. Le débit d'air fixe est assuré par la vanne (10), tandis que la vanne télécommandée (11) assure la régulation du débit d'air, en fonction du niveau de la suspension d'aluminate dans le décomposeur.

En cas d'arrêt d'alimentation du bac non agité, la vanne (8) installée sur le tube transfert (7) se ferme automatiquement, alors qu'en même temps une vanne d'air (12), télécommandée également, s'ouvre en parallèle des deux citées précédemment. Par l'ouverture de cette vanne, le débit d'air injecté augmente pour permettre d'assurer une recirculation interne de la suspension sur le bac par la surverse (9) prévue dans la partie haute du caisson de désaération (6), de façon à éviter que le solide ne s'accumule dans le fond du bac de façon irréversible. Le circuit comporte en outre, au moins une vanne supplémentaire (13) d'arrêt général.

La suspension de trihydrate d'alumine provenant du bac précédent par la canalisation (14) est, de préférence, répartie uniformément sur toute la surface (18) du décomposeur grâce un répartiteur, tel que (15) qui peut, par exemple, être constitué par une série de petits tubes (16) immergés, inclinés et alimentés à leur partie inférieure par un faible débit d'air comprimé, amené par le tube (17), de façon à fonctionner en émulseur, ou encore par tout autre moyen équivalent connu de l'homme de l'art.

Sur la figure 2 le prélèvement de la suspension est effectué à la base du cône (3) par un tube externe (4) la remontée étant obtenue soit par un tube d'injection d'air (5) soit par une pompe (19). Dans tous les cas, la partie supérieure du tube (4) comporte une canalisation (9) de recyclage vers le bac (1), et un tube (7) vers l'aval, avec au moins une vanne d'isolation (8).

Par convention, on définit une liqueur d'aluminate de sodium dans le procédé Bayer par sa concentration en Na$_2$O caustique et son rapport pondéral RP qui est le rapport du poids d'alumine exprimé en Al$_2$O$_3$ au poids de soude caustique. Il faut entendre par soude caustique, la quantité totale de Na$_2$O, dans la solution d'aluminate de sodium à décomposer, se présentant sous la forme liée d'aluminate de sodium et sous la forme libre d'hydroxyde de sodium.

La liqueur présente dans la suspension entrant dans le premier décomposeur a généralement un RP de l'ordre de 1,05 à 1,10, avec une teneur en Na₂O caustique de l'ordre de 150 à 160 grammes par litre.

Le décomposeur, alimenté en surface et la suspension étant extraite par le fond, fonctionne hydrauliquement en écoulement lent, dit "écoulement piston". Cet écoulement lent ne crée pas d'agitation, et permet d'établir un équilibre dynamique stable dans le bac.

A l'équilibre, on constate que chaque tranche élémentaire de liqueur (en section horizontale) est à un RP constant (mais différent pour chaque tranche), qui évolue, du haut vers le bas, en restant en tous points très proche de la cinétique théorique de la décomposition discontinue classique (réaction dite "en batch").

Exemples de mise en œuvre

1. Dans une première installation industrielle, comportant deux décomposeurs en série, on a mis en oeuvre l'invention dans les conditions suivantes :

. Caractéristiques de chaque bac décomposeur :
. Caractéristiques hydrauliques et chimiques : .
bac 1er étage : débit = 430 m³/h
vitesse = 6,8 m/h
RP entrée = 1,03
RP sortie = 0,89
Durée d'une campagne entre deux décolmatages chimiques = 4 mois au lieu de 3 mois dans un bac identique mais agité
. bac 2ème étage : débit = 215 m³/h
vitesse : 3,4 m/h
RP entrée = 0,89
RP sortie = 0,78
Durée de campagne entre deux décolmatages chimiques :
supérieure à 5 mois, au lieu d'une durée de 4 mois dans un bac identique agité
(le RP que l'on aurait en sortie avec un bac agité serait de : 0,82);

2. Dans une seconde installation industrielle, comportant un seul décomposeur, on a mis en oeuvre l'invention dans les conditions suivantes :

. Caractéristiques du bac décomposeur : Volume = 3000 m³

. Caractéristiques hydrauliques : Vitesse : 3,1 m/h
débit = 350 m³/h
RP entrée = 0,95
RP sortie = 0,82

## AVANTAGES PROCURES PAR L'INVENTION

a) Le gain d'énergie a déjà été mentionné précédemment. Par rapport à un décomposeur agité et émulsionné à l'air, qui peut nécessiter plusieurs dizaines de kW à l'agitation, et une dizaine de Nm³/mn d'air pour l'émulsion on économise la totalité de l'énergie d'agitation, et la consommation d'air pour assurer la remontée de la suspension dans le tube (4), est réduite, selon l'invention, à environ 1 à 2 Nm³/mn.

Le coût d'aménagement d'un tel bac est beaucoup plus faible que celui d'un agitateur.

b) L'exploitation est considérablement facilitée par rapport à un décomposeur agité.

Le décomposeur non agité n'est pas sujet à un entartrage du fond. Les dépôts sur les parois sont du même ordre que ceux qui se produisent dans les bacs agités.

La régulation de niveau est particulièrement aisée, en jouant sur l'injection d'air dans le tube (4) et sur le recyclage éventuel par la surverse (9), notamment En cas de fluctuation du débit d'alimentation ou même d'arrêt total. En cas de panne électrique générale, il suffit de disposer d'un faible débit d'air comprimé pour assurer le recyclage donc éviter les dépôts irréversibles dans le fond du bac. Une telle panne est souvent désastreuse dans les décomposeurs agités mécaniquement ou par les importants débits d'air comprimé d'émulsion.

c) D'un point de vue du procédé, le volume du décomposeur est mieux utilisé pour la progression de la réaction, grâce à la non-agitation et à l'écoulement unidirectionnel, pour 2 raisons :
1- Il n'existe pas de zone morte dans le bac, et l'on utilise tout son volume utile. Dans un bac agité, de façon classique, par émulsion d'air, le volume d'air constituant l'émulsion atteint 10 à 15 % du volume total du bac.
2- La réaction est méthodique grâce à l'écoulement du type "piston".

La mise en oeuvre de l'invention constitue donc, pour ces diverses raisons, une amélioration très sensible des procédés de production continue d'alumine à partir des liqueurs Bayer.

## Revendications

1. Procédé de décomposition d'une liqueur d'aluminate de sodium sursaturée en alumine, provenant de l'attaque alcaline de bauxite selon le procédé Bayer, la décomposition étant déclenchée par introduction d'amorce de trihydrate d'alumine formant ainsi une suspension, ce procédé étant carctérisé en ce que la suspension introduite à la partie supérieure d'une réacteur (1) dit "décomposeur", non agité, et constituant l'unique flux d'alimentation réparti uniformément sur toute la surface libre, circule dans ledit décomposeur, non agité, à une vitesse réglée entre 1,5 et 10 mètres par heure, puis est prélevée à sa partie inférieure et envoyée vers l'aval.

2. Procédé selon revendication 1, caractérisé en ce que la vitesse de circulation de la suspension est réglée entre 3 et 7 mètres par heure.

3. Dispositif pour la mise en œuvre du procédé de décomposition sans agitation selon l'une quelconque des revendications 1 ou 2, comprenant un réacteur cylindro-conique (1) muni à sa partie supérieure d'un conduit (14) d'introduction de la suspension, et à sa partie inférieure d'un dispositif de prélèvement (4) de la suspension, connecté au voisinage de la partie conique (3) du réacteur (1), caractérisé en ce que la suspension arrivant par le conduit (14) est déversée à la partie supérieure du réacteur dans une zone de répartition (15) en forme de cône renversé, définie par une série de petits tubes (16) immergés, inclinés par rapport à la verticale et alimentés à leur partie inférieure par un faible débit d'air sous pression de façon à répartir la suspension sur le pourtour de ladite zone.

4. Dispositif selon revendication 3, caractérisé en ce que le dispositif de prélèvement de la suspension d'aluminate est constitué par un tube (4) comportant, à sa partie inférieure, un moyen (5) d'injection d'air sous pression et, à sa partie supérieure, d'un caisson (6) de désaération sur lequel se raccordent une tuyauterie de transfert (7) vers l'aval et une surverse (9) de recyclage.

5. Dispositif selon revendication 4, caractérisé en ce qu'il comporte une vanne de régulation (11) du débit d'air injecté sous pression par le moyen (5), en fonction du niveau de la suspension d'aluminate dans le décomposeur.

## Patentansprüche

1. Verfahren zur Zersetzung einer vom alkalischen Aufschluß von Bauxit nach dem Bayer-Verfahren stammenden, an Aluminiumoxid übersättigten Natriumaluminatflüssigkeit, welche Zersetzung durch Einführung von Aluminiumoxidtrihydrat-Impfmittel ausgelöst wird, wodurch eine Suspension gebildet wird, welches Verfahren dadurch gekennzeichnet ist, daß die in den oberen Teil eines nichtgerührten, "Zersetzer" genannten Reaktionsbehälters (1) eingeführte und den einzigen, gleichmäßig über seine ganze freie Oberfläche verteilten Einspeisungsstrom bildende Suspension in diesem Zersetzer mit einer zwischen 1,5 und 10 m/h regulierten Geschwindigkeit zirkuliert, dann an seinem unteren Teil abgezogen und in Stromabrichtung gefördert wird.

2. Verfahren nach Anspruch 1, dadurch gekennzeichnet, daß die Zirkulationsgeschwindigkeit der Suspension zwischen 3 und 7 m/h reguliert wird.

3. Vorrichtung zur Durchführung des Zersetzungsverfahrens ohne Rühren nach irgendeinem der Ansprüche 1 oder 2, die einen zylindrisch-konischen Reaktionsbehälter (1) aufweist, der an seinem oberen Teil mit einer Leitung (14) zur Einführung der Suspension und an seinem unteren Teil mit einer Entnahmeeinrichtung (4) der Suspension ausgerüstet ist, die in der Nähe des konischen Teils (3) des Reaktionsbehälters (1) angeschlossen ist, dadurch gekennzeichnet, daß die durch die Leitung (14) ankommende Suspension im oberen Teil des Reaktionsbehälters in eine Verteilungszone (15) der Form eines umgekehrten Kegels gegossen wird, die von einer Gruppe kleiner untergetauchter Rohre (16) definiert wird, die zur Vertikalen geneigt sind und an ihrem unteren Teil durch einen geringen Durchsatz von Druckluft derart gespeist werden, daß die Suspension über den Umfang dieser Zone verteilt wird.

4. Vorrichtung nach Anspruch 3, dadurch gekennzeichnet, daß die Entnahmeeinrichtung der Aluminatsuspension aus einem Rohr (4) besteht, das in seinem unteren Teil ein Mittel (5) zur Injektion von Druckluft und an seinem oberen Teil einen Entlüftungskasten (6) aufweist, an den eine Förderleitung (7) in Stromabrichtung und ein Rückführungsüberlauf (9) angeschlossen sind.

5. Vorrichtung nach Anspruch 4, dadurch gekennzeichnet, daß sie ein Regelventil (11) für den Durchsatz der durch das Mittel (5) injizierten Druckluft als Funktion des Niveaus der Aluminatsuspension im Zersetzer aufweist.

## Claims

1. A method of decomposing a sodium aluminate liquor which is supersaturated with alumina, resulting from the alkaline attack on bauxite by the Bayer process, decomposition being initiated by the introduction of an alumina trihydrate starter thereby forming a suspension, the method being characterised in that the suspension which is introduced in the upper part of a non-agitated reactor (1) referred to as a 'decomposer', and forming the single feed flow which is uniformly distributed over the whole of the free surface, circulates in said non-agitated decomposer at a speed which is regulated at between 1.5 and 10 metres per hour and is then taken off in the lower part thereof and passed downstream.

2. A method according to claim 1 characterised in that the speed of circulation of the suspension is regulated at between 3 and 7 metres per hour.

3. Apparatus for carrying out the agitations-less decomposition method according to either one of claims 1 and 2 comprising a cylindro-conical reactor (1) provided in its upper part with a conduit (14) for introducing the suspension and in its lower part with a means (4) for taking off the suspension, connected in the vicinity of the conical portion (3) of the reactor (1), characterised in that the suspension arriving by way of the conduit (14) is poured in the upper part of the reactor into a distribution zone (15) in the form of an inverted cone and defined by a series of small immersed tubes (16) which are inclined with respect to the vertical and which are fed in their lower part with a low flow rate of compressed air so as to distribute the suspension over the periphery of said zone.

4. Apparatus according to claim 3 characterised in that the means for taking off the aluminate suspension is formed by a tube (4) which in its lower part comprises a means (5) for injecting compressed air and which in its upper part comprises a de-aeration box (6) to which are connected a pipe means (7) for downstream transfer and a recycling overflow (9).

5. Apparatus according to claim 4 characterised in that it comprises a valve (11) for regulating the flow rate of air injected under pressure by the means (5), in dependence on the level of the aluminate suspension in the decomposer.

EP 0 195 732 B1

FIG.1

FIG.2